# EUROPÄISCHE PATENTSCHRIFT

(11) **EP 0 719 627 B1**
(45) Veröffentlichungstag und Bekanntmachung des Hinweises auf die Patenterteilung: **11.04.2001**
(21) Anmeldenummer: 95119762.3
(22) Anmeldetag: 14.12.1995
(51) Int. Cl.: B29C 44/46

(54) **Verfahren und Vorrichtung zur Schaumherstellung mittels unter Druck gelöstem Kohlendioxid**
Process and device for producing foam using carbon dioxide dissolved under pressure
Procédé et dispositif pour la production de mousse utilisant du gaz carbonique dissous sous pression

(30) Priorität: 27.12.1994 DE 4446876
(43) Veröffentlichungstag der Anmeldung: 03.07.1996
(73) Patentinhaber: Hennecke GmbH, 51379 Leverkusen (DE); BAYER AG, 51368 Leverkusen (DE)
(72) Erfinder: Sulzbach, Hans-Michael, D-53639 Königswinter (DE); Althausen, Ferdinand, D-53819 Neunkirchen (DE); Steilen, Herbert, D-53639 Königswinter (DE); Raffel, Reiner, D-53721 Siegburg (DE); Eiben, Robert Dr., 51061 Köln (DE); Ebeling, Wilfried, 51069 Köln (DE)
(74) Vertreter: Drope, Rüdiger, Dr.

(56) Entgegenhaltungen:
- EP-A- 0 683 027
- DE-C- 3 126 125
- DE-U- 9 411 804
- FR-A- 2 255 328
- FR-A- 2 378 625
- US-A- 3 297 474

## Beschreibung

Die vorliegende Erfindung betrifft ein Verfahren und eine Vorrichtung zur Herstellung von Schäumen mittels unter Druck gelöstem Kohlendioxid als Treibmittel, wobei die zu verschäumende Masse unter Druck mit vorzugsweise flüssigem Kohlendioxid vermischt und anschließend unter Schaumbildung entspannt wird. Als verschäumbare Massen werden insbesondere flüssige Ausgangsprodukte für Kunststoffe eingesetzt, die aufgrund einer nach dem Verschäumen einsetzenden Polyadditions- oder Polykondensationsreaktion zum Schaum-Kunststoff aushärten. Speziell bezieht sich die Erfindung auf Polyurethan-Schaumstoffe.

Bei der Herstellung von Polyurethanschaumstoffen wird mindestens eine der Reaktivkomponenten (Polyisocyanat und Isocyanat-reaktive Wasserstoffatome aufweisende Verbindungen, insbesondere Polyole) mit einem flüssigen oder gasförmigen Treibmittel versetzt, danach mit der anderen Komponente vermischt und die erhaltene Mischung entweder diskontinuierlich in eine Form oder kontinuierlich auf ein Transportband gefördert, wo die Mischung aufschäumt und aushärtet.

Zur Erzeugung des Schaums haben eine Reihe von Verfahren breite Anwendung in der Technik gefunden. Einerseits werden bei niedriger Temperatur verdampfende Flüssigkeiten wie niedermolekulare Chlorfluorkohlenwasserstoffe, Methylenchlorid, Pentan usw. eingesetzt, die aus der noch flüssigen Reaktivmischung verdampfen und Bläschen bilden (physikalische Schaumerzeugung). Ferner kann in die Reaktivmischung bzw. in eine der Komponenten Luft eingeschlagen werden (mechanische Schaumerzeugung) und schließlich wird bei Polyurethanschäumen Wasser als Treibmittel der Polyolkomponente zugesetzt, das nach Vermischung mit der der Isocyanatkomponente durch Reaktion mit dem Isocyanat Kohlendioxid als Schäumgas freisetzt (chemische Schaumerzeugung).

Aus Gründen der Umweltverträglichkeit, der Arbeitshygiene und aufgrund der vergleichsweise hohen Löslichkeit von flüssigem Kohlendioxid in der Polyolkomponente wurde flüssiges Kohlendioxid bereits vielfach als Treibmittel vorgeschlagen (GB-A 803 771, US-A 3 184 419). Jedoch hat Kohlendioxid bisher keinen Eingang in die Technik gefunden, offenbar aufgrund der Schwierigkeiten, bei der erforderlichen Entspannung der Reaktivmischung von Drücken zwischen 10 und 20 bar gleichmäßige Schäume zu erzeugen. Dabei besteht das Problem einerseits darin, dass unmittelbar nach der Entspannung das Kohlendioxid relativ plötzlich verdampft, so dass eine sehr starke Volumenvergrößerung der Reaktionsmischung um einen Faktor von beispielsweise ca. 10 erfolgt, die schwer zu beherrschen ist, und andererseits die Reaktivmischung zu Freisetzungsverzügen des Kohlendioxids neigt, die 3 bis 6 bar unterhalb des Gleichgewichtsdampfdrucks von CO₂ bei der jeweiligen Temperatur liegen können, so dass es zu plötzlichen, explosionsartigen Kohlendioxid-Freisetzungen kommt mit der Folge, dass große Blasen oder Lunker in den Schaumstoff eingeschlossen sind.

Gemäß DE-A 2 628 785 wurde daher offenbar zur Bereitstellung von Keimen für die Kohlendioxid-Freisetzung bereits vorgeschlagen, in die Polyol-Komponente Luft einzubringen, bevor in dieser Kohlendioxid gelöst wird.

Gemäß DE-U 94 11 804 wurde vorgeschlagen, die Kohlendioxid gelöst enthaltende Reaktivmischung kontinuierlich durch eine quer zur Durchströmrichtung ausgedehnte, aus langgestreckten Strömungskanälen bestehende Druckreduktionszone zu entspannen und in einem sich daran anschließenden Aufschäumhohlraum aufschäumen zu lassen.

Gemäß EP-A 145 250 wird die Fähigkeit des Kohlendioxids zur Bildung von Addukten mit Wasser und anderen niedrigmolekularen Flüsssigkeiten ausgenutzt, um eine verzögerte Freisetzung des Kohlendioxids aus der Reaktivmischung zu erzielen, so dass die Schaumbildung durch Freisetzung des Kohlendioxids erst nach der Entspannung der Reaktivmischung verzögert einsetzt. Nach Zerstörung des Adduktes steht das Wasser als zusätzliches chemisches Treibmittel zur Verfügung. Allerdings wird die Beherrschbarkeit der Schaumbildung im großtechnischen Prozess hierdurch kaum verbessert, da sowohl die Adduktbildung als auch deren Zerfall äußerst labil gegenüber den sonstigen in der Reaktivmischung herrschenden Bedingungen sind, außer man würde die dort ebenfalls beschriebenen, in einem separaten Schritt hergestellten Addukte unter Mitwirkung niedermolekularer tertiärer Amine einsetzen, die offenbar gegenüber spontan gebildeten Wasser/CO₂-Addukten eine erheblich verlängerte Zerfallszeit aufweisen.

Kombinationen von physikalisch gelöstem Kohlendioxid und anderen bei niedriger Temperatur siedenden physikalischen oder chemischen Treibmitteln wie Wasser oder Chlorfluorkohlenwasserstoffe werden auch bereits gemäß EP-A 89 796 vorgeschlagen.

All diese Vorschläge haben nicht zu technisch anwendbaren Lösungen für den Einsatz von physikalisch unter Druck gelöstem CO₂ als Treibmittel für die Polyurethan-Schaumherstellung geführt.

Die der vorliegenden Erfindung zugrundeliegenden Untersuchungen gehen von der Vorstellung aus, daß die Bedingungen, unter denen die unter Druck stehende, CO₂ enthaltende Polyurethan-Reaktivmischung entspannt wird, wesentlichen Einfluß auf die Schaumbildung hat.

Gemäß US-A 3 184 419 wird die aus der Mischvorrichtung austretende, unter Druck stehende, Kohlendioxid enthaltende Reaktivmischung durch ein Ventil offenbar plötzlich entspannt. Gemäß EP-A 145 250 sollte die Entspannung allmählich ("gradually") erfolgen, wobei der allmähliche Druckabbau beim Durchströmen der Kohlendioxid enthaltenden Reaktivmischung durch einen Schlauch erfolgen kann. Dabei wird die noch im Schlauch erfolgende Freisetzung eines Teils des Gases nicht notwendigerweise als Nachteil angesehen, da hierdurch die Blasenkeimbildung unterstützt werden kann. Im Rahmen der der vorliegenden Erfindung zugrundeliegenden Untersuchungen hat sich jedoch gezeigt, daß eine solche vorzeitige, d.h. spontane und nicht induzierte Blasenkeimbildung für die Porenstruktur des Schaumes eher nachteilig ist, da aus einer solchen spontanen Blasenkeimbildung regelmäßig ein Schaum resultiert, der nicht nur eine stark unterschiedliche Porenstruktur aufweist, sondern auch größere Lunker und Voids.

Das Konzept der verzögerten Kohlendioxidfreisetzung, d.h. der Freisetzung erst nach Aufbringung der Reaktivmischung auf das Formgebungsmittel (Transportband oder Form) durch Adduzierung des Kohlendioxid an hydroxylgruppenhaltige Verbindungen führt auch deswegen nicht zu einer kontrollierten Schaumbildung, weil die Addukte unter Verschäumungsbedingungen extrem instabil sind und daher immer auch größere Mengen von nicht adduziertem Kohlendioxid vorhanden sind, die bei entsprechender Anwesenheit von Blasenkeimen spontan vorzeitig freigesetzt werden.

Aufgrund dieser und anderer Beobachtungen wurden folgende Forderungen für die Entwicklung eines Verfahrens zur Herstellung von Schaumstoffen aus Zweikomponentenreaktivkunststoffen unter Einsatz von physikalisch unter Druck gelöstem Kohlendioxid als Treibmittel aufgestellt:
1. Die Entspannung der Kohlendioxid gelöst enthaltenden Reaktivmischung von einem Druck, bei dem die Mischung untersättigt ist, bis zu einem Druck, bei dem die Mischung möglichst stark an Kohlendioxid übersättigt ist, soll innerhalb so kurzer Zeiträume erfolgen, innerhalb derer eine Freisetzung des Kohlendioxids noch nicht erfolgt.
2. Die Ausbildung von Blasenkeimen in der flüssigen Zweikomponenten-Reaktivmischung muss derart kontrolliert erfolgen, dass jeder erzeugte Blasenkeim in gleicher Weise an der Freisetzung des Kohlendioxids aus der Reaktivmischung teilnehmen kann, so dass möglichst gleichmäßige Poren erzeugt werden.
3. Bei der induzierten Blasenkeimbildung sollen bereits so viele Blasenkeime erzeugt werden, wie der Porenzahl im ausgehärteten Schaumkunststoff entspricht.
4. Die Keimbildung soll bei einer möglichst großen Übersättigung der Reaktivmischung an gelöstem Kohlendioxid herbeigeführt werden, d. h. unmittelbar im Anschluss an die Entspannung auf angenähert Umgebungsdruck.

Gegenstand der vorliegenden Erfindung ist dementsprechend ein Verfahren zur Herstellung von Schaumstoffen aus Zweikomponenten-Reaktivkunststoffen unter Einsatz von Kohlendioxid als Treibmittel durch Vermischen von mindestens einer der Reaktivkomponenten mit Kohlendioxid unter Druck, Vermischen der Komponenten, von denen mindestens eine Kohlendioxid unter Druck enthält, Entspannen der Kohlendioxid enthaltenden flüssigen Reaktivmischung und Aushärten, das dadurch gekennzeichnet ist, dass die Flüssigkeit durch einen langgestreckten Strömungskanal gedrückt wird, wobei der Druck gegen den Strömungswiderstand unter Erzeugung hoher Schergeschwindigkeiten abgebaut wird und anschließend vor dem Aufschäumen der Flüssigkeit deren Strömungsgeschwindigkeit auf 1/10 bis 1/500 reduziert wird.

Vorzugsweise beträgt die im Strömungskanal erzeugte Schwergeschwindigkeit mehr als 10⁴/Sekunde, besonders bevorzugt mehr als 10⁵/Sekunde, insbesondere mehr als 10⁶/Sekunde.

Die Verweilzeit der Reaktivmischung im Strömungskanal beträgt vorzugsweise weniger als 10 Millisekunden, insbesondere bevorzugt weniger als 1 Millisekunde.

Gegenstand der vorliegenden Erfindung ist ferner eine Vorrichtung gemäß dem unabhängigen Anspruch 4.

Vorzugsweise wird der Strömungskanal in Form eines quer zur Durchströmrichtung langgestreckten Spaltes ausgebildet; besonders bevorzugt in Form eines rotationssymmetrischen Ringspalts.

Insbesondere bevorzugt wird der Ringspalt durch einen sich konisch erweiternden oder verengenden rotationssymmetrischen Zentralkörper und eine angepaßte konische Bohrung im Gehäusekörper gebildet, wobei Zentralkörper und Gehäusekörper in Achsenrichtung zur Einstellung der Spaltbreite gegeneinander verschiebbar ausgebildet werden.

Geeignete Mittel zur Reduktion der Geschwindigkeit der den Strömungskanal durchtretenden Flüssigkeit sind eine hinter der Austrittsöffnung des Strömungskanals angeordnete Prallfläche, auf die der Flüssigkeitstrahl auftrifft, oder ein hinter der Austrittsöffnung angeordnetes Sieb mit einem freien Querschnitt, der um den Faktor der Geschwindigkeitsreduktion größer ist als der freie Querschnitt der Austrittsöffnung.

Die geringe Querabmessung des Strömungskanals beträgt vorzugsweise 0,05 bis 1 mm, besonders bevorzugt 0,1 bis 0,5 mm. Die Länge des Strömungskanals in Durchströmrichtung beträgt vorzugsweise das 30- bis 300-fache, besonders bevorzugt das 50- bis 200-fache, der geringen Querschnittsabmessung.

Als Zweikomponenten-Reaktivkunststoffe werden vorzugsweise Polyurethankunststoffe nach dem Polyisocyanat-Polyadditionsverfahren hergestellt.

Dabei werden als Komponente A aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben sind, eingesetzt.

Bevorzugt eingesetzt werden aromatische Polyisocyanate, besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat ableiten.

Als zweite Komponente B ("Polyolkomponente") werden Verbindungen mit mindestens zwei gegenüber Isocyanaten reaktionsfähigen Wasserstoffatomen mit Molekulargewichten von in der Regel zwischen 60 und 5000, vorzugsweise zwischen 100 und 2000, besonders bevorzugt zwischen 200 und 800. Hierunter versteht man neben Aminogruppen, Thiolgruppen oder Carboxylgruppen aufweisenden Verbindungen vorzugsweise Hydroxylgruppen aufweisende Verbindungen, insbesondere 2 bis 8 Hydroxylgruppen aufweisende Verbindungen, speziell solche mit Molekulargewichten zwischen 200 und 2000, vorzugsweise 300 bis 1200, z.B. mindestens 2, in der Regel 2 bis 8, vorzugsweise aber 2 bis 6, Hydroxylgruppen aufweisende Polyester, Polyether, Polythioether, Polyacetale, Polycarbonate und Polyesteramide, wie sie für die Herstellung von Polyurethanschäumen an sich bekannt sind; ganz besonders bevorzugt sind Polyetherpolyole.

Für den Einsatz als Polyolkomponente geeignete Verbindungen sind auf den Seiten 6 bis 9 der EP-B 121 851 beschrieben.

Ferner können zur Herstellung der Reaktivmischung gegebenenfalls Wasser, weitere Treibmittel, Schaumstabilisatoren, Katalysatoren sowie sonstige an sich bekannte Hilfs- und Zusatzstoffe eingesetzt werden. Diese an sich bekannten, weiter einsetzbaren Mittel sind auf Seiten 9 bis 11 der EP-B 121 850 offenbart.

Insbesondere bevorzugt wird erfindungsgemäß Wasser als zusätzliches Treibmittel in einer Menge von besonders bevorzugt 1 bis 7 Gew.-%, bezogen auf die Reaktivmischung mitverwendet. Bevorzugt wird Wasser in einer Menge von 2 bis 5 Gew.-% mitverwendet.

Die zusätzlich einsetzbaren Mittel können dein Mischaggregat zur Vermischung von Isocyanatkomponente und Polyolkomponente getrennt zugeführt werden oder aber bereits vor der Vermischung von Isocyanat mit Polyol einer der beiden Hauptkomponenten zugeführt werden, wobei das mitverwendete Wasser und weitere eventuell mit Isocyanat reagierende Zusatzkomponenten nur der Polyolkomponente zugemischt werden dürfen.

Die Verfahrenstechnik zur Herstellung von Polyurethanschäumen ist prinzipiell in Becker/Braun, Kunststoff-Handbuch, Band 7: Polyurethane, 1993, Seiten 143 bis 149, insbesondere in Bild 4.8 und Bild 4.9 auf Seite 148 dargestellt.

Vorzugsweise werden die Komponenten in einer sogenannten Niederdruck-Rührwerksmischkammer vermischt, wobei erfindungsgemäß in der Mischkammer ein Druck herrscht, der oberhalb des Sättigungsdruckes für das gelöste Kohlendioxid liegt.

In einer oder mehreren der Komponenten, insbesondere der Polyolkomponente, wird vor der Einleitung der Komponenten in den Mischkopf Kohlendioxid gelöst. Vorzugsweise wird Kohlendioxid in einer Menge von 1 bis 7 Gew.-%, vorzugsweise 2 bis 5 Gew.-%, bezogen auf die Gesamt-Reaktivmischung gelöst. Die Auflösung des Kohlendioxids, vorzugsweise nur in der Polyolkomponente, kann auf beliebige Weise erfolgen, z.B.
a) gasförmiges Kohlendioxid wird in einen die Polyolkomponente enthaltenden Behälter, der bei einem Druck von 15 bis 25 bar gehalten wird, in das Polyol mittels eines Rührwerks eingemischt;
b) flüssiges Kohlendioxid wird bei Raumtemperatur z.B. in einem Statikmischer bei einem Druck von 70 bis 80 bar mit dem Polyol vermischt und anschließend vor der Einführung in den Niederdruck-Rührwerksmischkopf auf einen Druck von 15 bis 25 bar entspannt;
c) flüssiges, auf z.B. -20°C abgekühltes Kohlendioxid wird bei einem Druck von 15 bis 25 bar mit der bei Raumtemperatur befindlichen Polyolkomponente vermischt, wobei die Vermischung derart erfolgt, daß das Kohlendioxid in der Polyolkomponente gelöst wird, bevor es verdampfen kann.

Es wurde gefunden, daß insbesondere die bevorzugte Alternative c) aufgrund der hohen Neigung des Kohlendioxids, in Lösung zu gehen, mittels eines schnellaufenden Durchflußrührers, der in der Polyolleitung an der Einleitstelle für das flüssige Kohlendioxid angeordnet ist, gelingt.

Die Komponenten des Reaktivkunststoffs, von denen mindestens eine das gelöste Kohlendioxid enthält, werden nun dem Mischkopf zugeführt, hier vermischt und im Anschluß an den Austritt aus dem Mischkopf unter Schaumbildung erfindungsgemäß entspannt.

Sofern die Zusammensetzung der Reaktivmischung die spontane Ausbildung von CO₂-Addukten z.B. an hydroxylgruppenhaltigen Verbindungen begünstigt, wird verzögert um die erforderliche Zerfallszeit der Addukte zusätzlich CO₂ freigesetzt, das im wesentlichen zur Vergrößerung des bereits vorhandenen Schaumblasen führt. Bei Mitverwendung von Wasser als chemisches Treibmittel "steigt" der Schaum weiter beim Beginn der Isocyanatreaktion mit dem Wasser.

Die Erfindung wird nachfolgend anhand der beigefügten Figuren näher erläutert:
- Fig. 1: zeigt den Längs-/Querschnitt durch eine erste Ausführungsform der vorliegenden Erfindung mit konisch sich erweiterndem rotationssymmetrischem Strömungskanal und Prallflächen zur Reduktion der Strömungsgeschwindigkeit der Flüssigkeit.
- Fig. 2: zeigt einen Querschnitt A-A durch die Vorrichtung gemäß Fig. 1.
- Fig. 3: zeigt eine weitere Ausführungsform der vorliegenden Erfindung mit konisch sich verengendem Strömungskanal.
- Fig. 4: zeigt eine Ausführungsform gemäß Fig. 1, bei der der Abstand der Prallflächen vom Austrittsende des Strömungskanals variierbar ist.
- Fig. 5: zeigt eine weitere Ausführungsform der vorliegenden Erfindung, wobei das Mittel zur Reduktion der Strömungsgeschwindigkeit der Flüssigkeit ein Sieb ist.
- Fig. 6: zeigt eine Ausführungsform der vorliegenden Erfindung, bei dem das Auslaßende des Strömungskanals in Form einer Vielzahl von Austrittsöffnungen gestaltet ist.
- Fig. 7: zeigt einen Querschnitt B-B durch die Vorrichtung gemäß Fig. 6.
- Fig. 8: zeigt eine Teilansicht einer Anordnung zur Herstellung von Polyurethanschaum unter Einsatz einer Schaumerzeugungsvorrichtung gemäß Fig. 3.

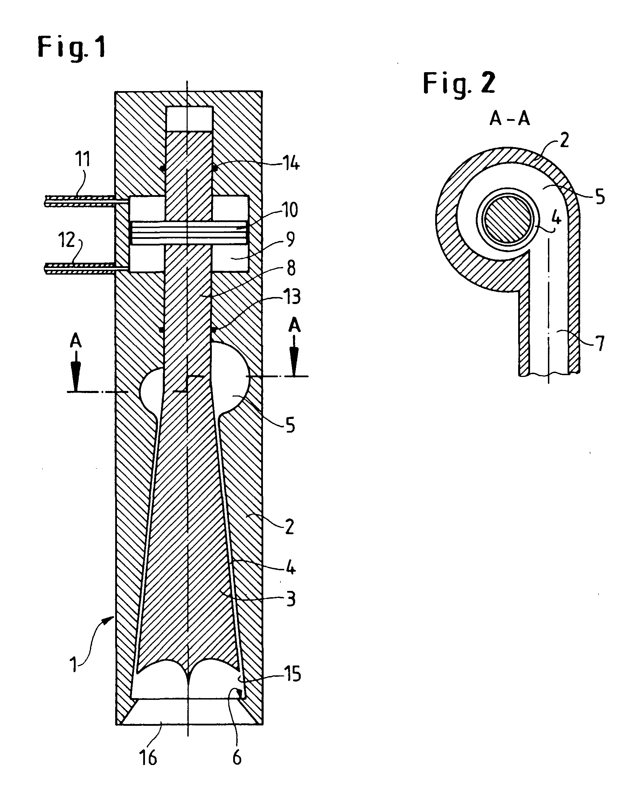

Die Schaumbildungsvorrichtung 1 gemäß Fig. 1 besteht aus einem Gehäuse 2 mit einer konisch sich erweiternden Bohrung, in die ein konisch sich erweiternder Zentralkörper 3 eingesetzt ist, wobei der konisch sich erweiternde Teil des Gehäuses 2 und der konisch sich erweiternde Teil des Zentralkörpers 3 einen in Form eines rotationssymmetrischen, sich konisch erweiternden Spaltes ausgebildeten Strömungskanal 4 bilden. An der Eintrittsseite für die Flüssigkeit in den Strömungskanal 4 befindet sich innerhalb des Gehäuses ein Verteilungskanal 5 für die Flüssigkeit, der aus einer Zuleitung 7 (siehe Fig. 2) gespeist wird. In der dargestellten Ausführungsform ist die Breite des Strömungskanals 4 veränderbar ausgeführt, in dem der Zentralkörper 3 in axialer Richtung beweglich ausgebildet ist. Hierzu weist der Zentralkörper 3 eine zylindrische Fortsetzung 8 auf, die im Gehäuse 2 geführt ist und durch Gleitdichtungen 13, 14 gegen das Gehäuse abgedichtet ist. Die Bewegung in axialer Richtung des Zentralkörpers 3 erfolgt in der dargestellten Ausführungsform mittels eines hydraulischen Kolbens 10, der mit der zylindrischen Fortsetzung 8 verbunden ist und in dem Zylinderraum 9 mittels Hydraulikflüssigkeitsleitungen 11 und 12 in axialer Richtung beweglich ist.

Die unter Druck in den Verteilungsraum 5 eingeführte, Kohlendioxid gelöst enthaltende Flüssigkeit, insbesondere Polyurethanreaktivmischung, durchströmt den Strömungskanal 4 unter Entspannung. Am Auslaßende 15 des Kanals 4 tritt die Flüssigkeit mit hoher Geschwindigkeit aus. Quer zur Strömungsrichtung der Flüssigkeit ist die Prallfläche 6 vorgesehen, auf die die Flüssigkeit auftritt und ihre kinetische Energie turbulent abbaut. Die Flüssigkeit tritt dann durch den Austrittsquerschnitt 16 unter Aufschäumen aus.

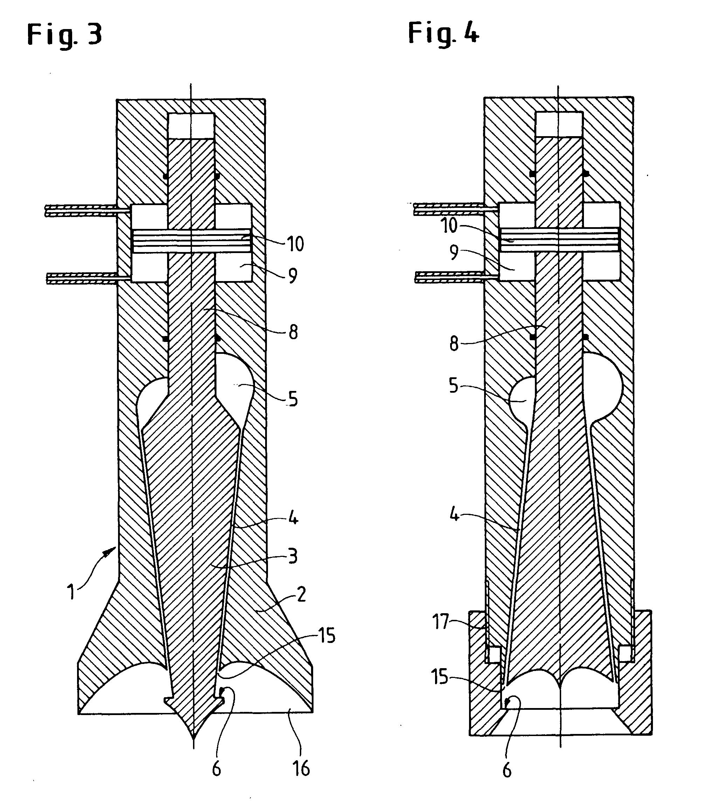

Fig. 3 zeigt eine Vorrichtung entsprechend Fig. 1, wobei jedoch der Strömungskanal 4 sich in Strömungsrichtung verjüngend ausgebildet ist und die Prallfläche 6 sich innerhalb des Austrittsquerschnitts 16 befindet.

Fig. 4 zeigt eine Ausführungsform der vorliegenden Erfindung gemäß Fig. 1, wobei jedoch der Abstand in Achsenrichtung der Prallfläche 6 von der Austrittsöffnung 15 des Strömungskanals 4 veränderbar gestaltet ist. In der gezeigten Darstellung kann der Abstand über das Schraubgewinde 17 variiert werden.

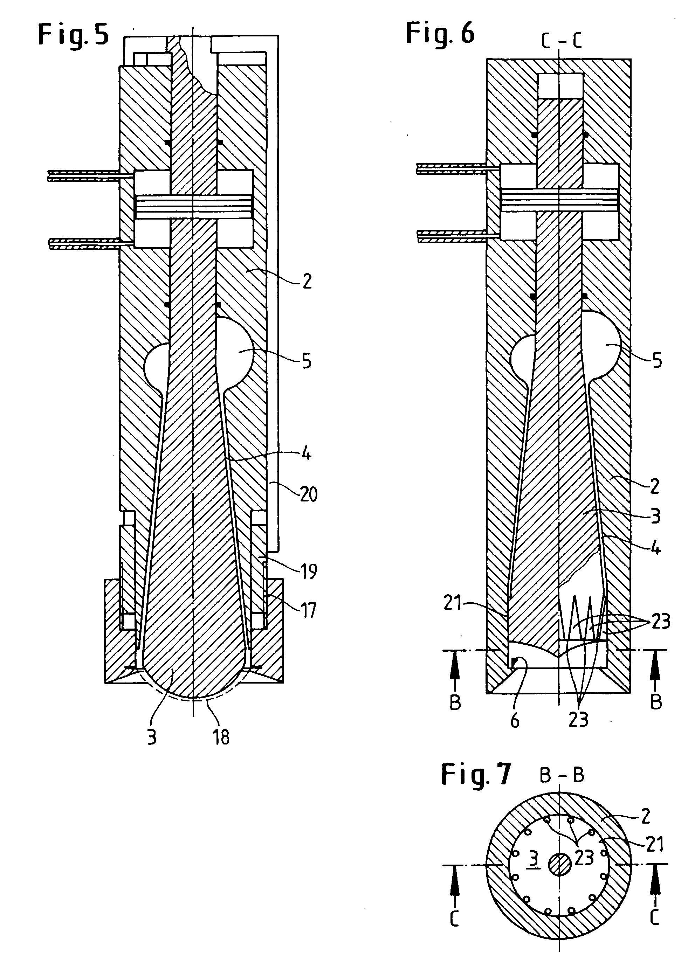

Fig. 5 zeigt eine erfindungsgemäße Vorrichtung, bei der als Mittel zur Reduktion der Geschwindigkeit der Flüssigkeit nach Austritt aus dem Spalt 4 ein Sieb bzw. Lochgitter 18 vorgesehen ist. Der Abstand des Lochgitters 18 vom Zentralkörper 3 kann mittels Schraubgewinde 17 eingestellt werden. Das Schraubgewinde 17 greift in einen Gleitring 19 ein, der über ein Gestänge 20 mit dem rückwärtig aus dem Gehäuse 2 herausgeführten Zentralkörper 3 verbunden ist. Auf diese Weise kann durch Veränderung der Breite des Spaltes 4 durch axiale Bewegung des Zentralkörpers 3 der einmal eingestellte Abstand des Siebes 18 vom Zentralkörper 3 beibehalten werden.

Fig. 6 zeigt eine Ausführungsform der vorliegenden Erfindung, bei der die konische Bohrung im Gehäuse 2 am Austrittsende des Spaltes 4 einen zylindriTeil 21 aufweist, und wobei in dem zylindrischen Teil des Spaltes 4 Strömungsteilerelemente 22 vorgesehen sind, die den Ringspalt 4 am Auslaßende in eine Vielzahl von Austrittsöffnungen 23 aufteilen.

Fig. 7 stellt einen Schnitt B-B durch die Darstellung gemäß Fig. 6 dar.

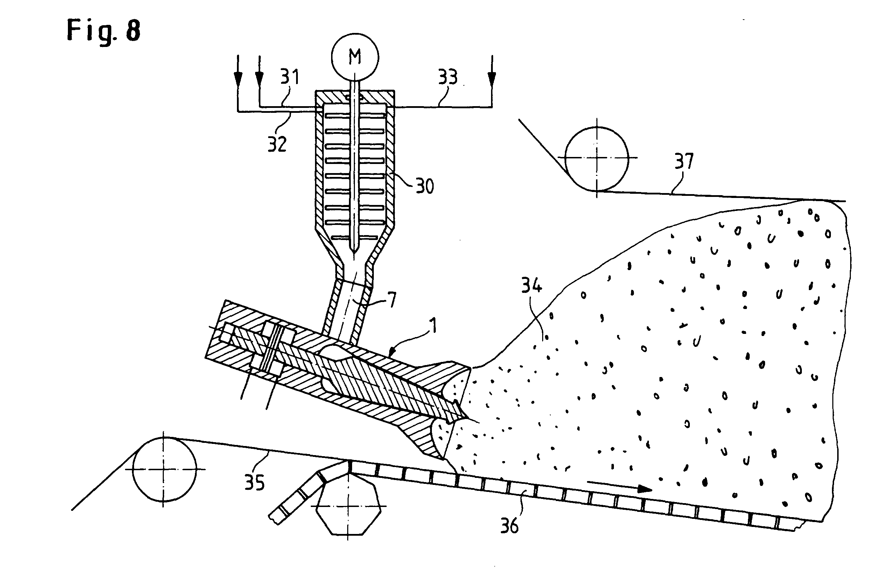

Fig. 8 erläutert den Einsatz der erfindungsgemäßen Schaumbildungsvorrichtung 1 in einer üblichen Anlage zur Herstellung von Polyurethan-Blockschaum. Dem Mischaggregat 30 wird über Leitung 31 die Polyolkomponente, die Kohlendioxid gelöst enthält, zugeführt und über Leitung 33 die Isocyanatkomponente. Ferner werden über Leitung 32 übliche Hilfs- und Zusatzstoffe in den Mischkopf eingeleitet. Aus dem Mischkopf 30 gelangt das Polyurethan-Reaktivgemisch über die Zuleitung 17 bei einem Druck, der oberhalb des Sättigungsdampfdruckes für das gelöste Kohlendioxid liegt, in die Schaumbildungsvorrichtung 1. Am Austrittsende der Schaumbildungsvorrichtung 1 schäumt die Polyurethanreaktivmischung auf. Der Schaum 34 wird auf einer unteren Kaschierfolie 35, die auf dem Transportband 36 von der Schaumbildungsvorrichtung 1 wegbewegt wird, abgelegt. Ferner kann eine obere Kaschierfolie 37 zugeführt werden.

Durch Steuerung der Förderleistung der nicht gezeigten Förderpumpen zur Zuführung der Reaktivkomponenten zum Mischaggregat 30 über Leitungen 31 und 33 und hydraulische Einstellung des Strömungskanals 4 (Fig. 3) kann einerseits der Druck in der Zuleitung 7 und andererseits die Schergeschwindigkeit im Strömungskanal 4 in Abhängigkeit von der Viskosität der kohlendioxidhaltigen Reaktivmischung eingestellt werden.

## Patentansprüche

1. Verfahren zur Herstellung von Schaumstoffen aus Zweikomponenten-Reaktivkunststoffen unter Einsatz von Kohlendioxid als Treibmittel durch Vermischen von mindestens einer der Reaktivkomponenten mit Kohlendioxid unter Druck, Vermischen der Komponenten, von denen mindestens eine Kohlendioxid unter Druck enthält, Entspannen der Kohlendioxid enthaltenden Reaktivmischung und Aushärten, wobei die Reaktivmischung durch einen langgestreckten Strömungskanal gedrückt wird, wodurch der Druck gegen den Strömungswiderstand unter Erzeugung hoher Schergeschwindigkeiten abgebaut wird, und wobei anschließend vor dem Aufschäumen der Flüssigkeit deren Strömungsgeschwindigkeit auf 1/10 bis 1/500 reduziert wird.

2. Verfahren nach Anspruch 1, dadurch gekennzeichnet, dass die Flüssigkeit bzw. Reaktivmischung den Strömungskanal innerhalb von weniger als 10⁻² Sekunden durchtritt.

3. Verfahren nach Anspruch 1 oder 2, dadurch gekennzeichnet, dass die im Strömungskanal erzeugte Schergeschwindigkeit mindestens 10⁴/Sekunde beträgt.

4. Vorrichtung zur Herstellung von Schaum aus einer Gas unter Druck gelöst enthaltenden Flüssigkeit durch Entspannen der Flüssigkeit auf einen Druck unterhalb des Sättigungsdruckes für das gelöste Gas und Freisetzen des Gases, enthaltend innerhalb eines Gehäuses (2) mindestens einen langgestreckten Strömungskanal (4) mit geringer Querabmessung in mindestens einer Dimension, einen Verteilungskanal (5) für die unter Druck stehende Flüssigkeit über die mindestens eine Eintrittsöffnung des Strömungskanals, eine Zufuhrleitung (7), aus der der Verteilungskanal (5) gespeist wird, sowie hinter dem Austrittsende (15) aus dem Strömungskanal (4) angeordnete Mittel (6, 18) zur Reduktion der Geschwindigkeit der Flüssigkeit auf 1/10 bis 1/500.

5. Vorrichtung nach Anspruch 4, wobei der Strömungskanal in Form eines Ringkanal-Konus ausgebildet ist und der den Ringkanal begrenzende Innenkonus zur Einstellung der geringen Querabmessung axial verschiebbar ausgebildet ist.

6. Vorrichtung nach Anspruch 4 oder 5, wobei das Verhältnis von Länge des Strömungskanals in Durchströmrichtung und geringer Querabmessung zwischen 30 und 300 beträgt.

## Claims

1. Method for manufacturing foams from two-component reactive plastics using carbon dioxide as blowing agent, by the mixing of at least one of the reactive components with carbon dioxide under pressure, mixing of the components, one at least of which contains carbon dioxide under pressure, expansion of the reactive mixture containing carbon dioxide and curing, wherein the reactive mixture is pressed through an extended flow channel, whereby the pressure is reduced against the flow resistance with generation of high rates of shear, and wherein then prior to the foaming up of the liquid the flow velocity of the latter is reduced to 1/10 to 1/500.

2. Method according to claim 1, characterised in that the liquid or reactive mixture passes through the flow channel within less than 10⁻² seconds.

3. Method according to claim 1 or 2, characterised in that the rate of shear generated in the flow channel comes to at least 10⁴/second.

4. Apparatus for manufacturing foam from a liquid containing gas under pressure in dissolved form by expansion of the liquid to a pressure below the saturation pressure for the dissolved gas and release of the gas, containing within a casing (2) at least one extended flow channel (4) with a small cross-sectional measurement in at least one dimension, a distribution chamber (5) for distributing the pressurized liquid through the at least one inlet opening of the flow channel, a feed line (7) from which the distribution chamber (5) is supplied, as well as means (6, 18) for reducing the velocity of the liquid to 1/10 to 1/500 which are arranged downstream of the outlet end (15) from the flow channel (4).

5. Apparatus according to claim 4, wherein the flow channel is formed in the shape of an annular groove-cone and the inner cone defining the annular groove is formed so as to be displaceable axially for the setting of the small cross-sectional measurement.

6. Apparatus according to claim 4 or 5, wherein the ratio of length of the flow channel in flow direction and small cross-sectional measurement is between 30 and 300.

## Revendications

1. Procédé de production de mousses à partir de matières synthétiques réactives à deux composants à l'aide du dioxyde de carbone comme agent porogène, par mélange d'au moins l'un des composants réactifs avec du dioxyde de carbone sous pression, mélange des composants dont l'un au moins contient du dioxyde de carbone sous pression, détente du mélange réactif contenant du dioxyde de carbone et durcissement, où le mélange réactif est introduit sous pression dans un canal d'écoulement allongé, ce qui abaisse la pression contre la résistance à l'écoulement en produisant de grandes vitesses de cisaillement, et où ensuite, avant l'expansion du liquide, sa vitesse d'écoulement est réduite à 1/10 à 1/500.

2. Procédé selon la revendication 1, caractérisé en ce que le liquide ou mélange réactif traverse le canal d'écoulement en moins de 10⁻² s.

3. Procédé selon la revendication 1 ou 2, caractérisé en ce que la vitesse de cisaillement produite dans le canal d'écoulement est d'au moins 10⁴/s.

4. Dispositif de production de mousse à partir d'un liquide contenant un gaz dissous sous pression par détente du liquide à une pression inférieure à la pression de saturation du gaz dissous et libération du gaz, contenant à l'intérieur d'un boîtier (2) au moins un canal d'écoulement allongé (4) ayant une petite dimension transversale dans au moins une dimension, un canal de distribution (5) pour le liquide sous pression au-dessus d'au moins une ouverture d'entrée du canal d'écoulement, une conduite d'introduction (7) par laquelle est alimenté le canal de distribution (5), ainsi que des moyens (6, 18) disposés derrière l'extrémité de sortie (15) du canal d'écoulement (4) pour réduire la vitesse du liquide à 1/10 à 1/500.

5. Dispositif selon la revendication 4, où le canal d'écoulement est sous forme d'un cône de canal annulaire et le cône interne limitant le canal annulaire est déplaçable axialement pour régler la petite dimension transversale.

6. Dispositif selon la revendication 4 ou 5, où le rapport de la longueur du canal d'écoulement dans la direction de circulation et de la petite dimension transversale est situé entre 30 et 300.
